# EUROPÄISCHE PATENTSCHRIFT

(11) **EP 3 237 683 B1**
(45) Veröffentlichungstag und Bekanntmachung des Hinweises auf die Patenterteilung: **05.12.2018**
(21) Anmeldenummer: 15813448.6
(22) Anmeldetag: 20.12.2015
(51) Int. Cl.: B28D 1/18, E01C 23/088

(54) **SELBSTFAHRENDE BAUMASCHINE UND VERFAHREN ZUM BETREIBEN EINER SELBSTFAHRENDEN BAUMASCHINE**
SELF-PROPELLED CONSTRUCTION MACHINE AND METHOD FOR OPERATING A SELF-PROPELLED CONSTRUCTION MACHINE
ENGIN DE CONSTRUCTION AUTOMOTEUR ET PROCÉDÉ POUR FAIRE FONCTIONNER UN ENGIN DE CONSTRUCTION AUTOMOTEUR

(30) Priorität: 23.12.2014 DE 102014019277; 05.03.2015 DE 102015002743
(43) Veröffentlichungstag der Anmeldung: 01.11.2017
(73) Patentinhaber: Wirtgen GmbH, 53578 Windhagen (DE)
(72) Erfinder: BERNING, Christian, 53909 Zülpich (DE); BARIMANI, Cyrus, 53639 Königswinter (DE); HÄHN, Günter, 53639 Königswinter (DE)
(74) Vertreter: Oppermann, Frank
(86) Internationale Anmeldenummer: PCT/EP2015/080699
(87) Internationale Veröffentlichungsnummer: WO 2016/102410

(56) Entgegenhaltungen:
- EP-A2- 2 354 310
- US-A1- 2008 173 740

## Beschreibung

Die Erfindung betrifft eine selbstfahrende Baumaschine, insbesondere Straßenfräsmaschine, Recycler, Stabilisierer oder Surface-Miner, die über einen Maschinenrahmen verfügt, der von einem Fahrwerk getragen wird, das Räder oder Laufwerke aufweist.

Im Straßenbau werden selbstfahrende Baumaschinen unterschiedlicher Bauart eingesetzt. Zu diesen Maschinen zählen die bekannten Straßenfräsmaschinen, Recycler oder Stabilisierer. Mit den bekannten Straßenfräsmaschinen können bestehende Straßenschichten des Straßenoberbaus abgetragen und mit den bekannten Recyclern bestehende Straßenbeläge wiederhergestellt werden. Die bekannten Stabilisierer dienen der Vorbereitung des Unterbaus für den Straßenbau. Darüber hinaus sind als selbstfahrende Baumaschinen sogenannte Surface-Miner bekannt, mit denen Kohle oder Gestein abgebaut werden kann.

Die oben genannten selbstfahrenden Baumaschinen verfügen über eine rotierende Fräswalze bzw. einen rotierenden Fräs-/Mischrotor oder eine Schneidwalze, die mit geeigneten Fräs- oder Schneidwerkzeugen besetzt sind. Nachfolgend wird die Fräswalze, der Fräs-/Mischrotor oder die Schneidwalze der bekannten Baumaschinen als Fräswalze bezeichnet.

Zum Antrieb der Räder oder Laufwerke und der Fräswalze weisen die bekannten Baumaschinen eine Antriebseinheit auf. Die Antriebsleistung wird von dem Antriebsmotor auf die Räder oder Laufwerke und die Fräswalze im Allgemeinen mit getrennten Antriebssträngen übertragen, die jeweils eigene Getriebesysteme aufweisen.

Darüber hinaus verfügen die bekannten Baumaschinen über eine Steuereinheit, mit der die Antriebseinheit gesteuert wird. Die Steuereinheit steuert die Antriebseinheit derart, dass sich die Baumaschine mit einer bestimmten Vorschubgeschwindigkeit bewegen und sich die Fräswalze mit einer bestimmten Drehzahl drehen kann.

Der Maschinenführer kann in Abhängigkeit von den jeweiligen Arbeitsbedingungen die Vorschubgeschwindigkeit der Baumaschine und die Drehzahl der Fräswalze innerhalb gewisser Grenzen vorgeben. Im Allgemeinen wird die Drehzahl der Fräswalze von der Drehzahl des Antriebsmotors der Antriebseinheit bestimmt, so dass über die Regelung der Motordrehzahl die Fräswalzendrehzahl gesteuert werden kann. Zusätzlich kann es auch vorgesehen sein, die Fräswalzendrehzahl über ein Getriebe in Stufen oder stufenlos zu verstellen, oder die Fräswalze hydraulisch bzw. elektrisch anzutreiben, wodurch die Fräswalzendrehzahl in weiten Bereichen stufenlos eingestellt werden kann. Zur Einstellung der Vorschubgeschwindigkeit und der Fräswalzendrehzahl verfügen die bekannten Baumaschinen über eine Eingabeeinheit. Der Maschinenführer kann mit der Eingabeeinheit im Allgemeinen diskrete Fräswalzendrehzahlen auswählen, die ihm für das Arbeitsvorhaben als geeignet erscheinen.

In der Praxis wird angestrebt, die Baumaschine mit einer möglichst hohen Vorschubgeschwindigkeit zu betreiben, so dass die Arbeitsleistung der Baumaschine so hoch wie möglich ist. Der Erhöhung der Vorschubgeschwindigkeit sind aber unter anderem durch die maximale Leistung der Antriebseinheit Grenzen gesetzt, die nicht nur zum Antrieb der Räder oder Laufwerke der Baumaschine, sondern auch zum Antrieb der Fräswalze dient. Darüber hinaus spielt auch der Kraftstoffverbrauch des Verbrennungsmotors bei der Vorgabe der Vorschubgeschwindigkeit eine Rolle. In der Praxis hat sich gezeigt, dass für die Qualität des Fräs- oder Schneidprozesses und den Verschleiß der Fräswerkzeuge der Fräswalze die Drehzahl der Fräswalze entscheidend ist. Die Drehzahl der Fräswalze beeinflusst auch den Kraftstoffverbrauch sowie den Verbrauch an Kühlmittel zum Kühlen der Fräsmeißel.

Für die Fräswalze wird in der Praxis eine möglichst niedrige Drehzahl angestrebt. Mit einer geringen Drehzahl der Fräswalze ergibt sich vorteilhaft ein geringerer Feinkornanteil im Fräsgut, wodurch auch die Staubbelastung reduziert wird. Bei einer niedrigeren Drehzahl der Fräswalze unterliegen die Fräsmeißel einem geringeren Verschleiß. Darüber hinaus führt eine Verringerung der Fräswalzendrehzahl auch zu einer Einsparung von Kraftstoff und Kühlmittel. Einer Verringerung der Fräswalzendrehzahl sind aber in der Praxis Grenzen gesetzt. Bei einer zu geringen Drehzahl besteht das Problem, dass die kinetische Energie der Fräswalze für eine effektive Bearbeitung des Materials nicht mehr ausreichend ist. Dann kommt es zu einem unrunden und unruhigen Lauf der Fräswalze, der sich unter anderem in Vibrationen der gesamten Baumaschine bis hin zum Aufschaukeln der Maschine zeigt, wobei auch Beschädigungen an der Maschine auftreten können. Weiterhin leidet durch den unruhigen Lauf der Fräswalze die Arbeitsqualität und es können Ungleichmäßigkeiten im Fräsbild auftreten. Im Extremfall kann bei nicht ausreichender kinetischer Energie die Fräswalze "steckenbleiben". Dieser kritische Betriebszustand ist nicht nur von der Drehzahl der Fräswalze, sondern unter anderem auch von der Vorschubgeschwindigkeit der Baumaschine, der Beschaffenheit des zu bearbeitenden Materials und dem Gewicht der Baumaschine abhängig. Entscheidend können darüber hinaus auch die Umgebungsbedingungen sein, die sich auf das Material auswirken. So ist beispielsweise Asphalt bei höheren Temperaturen weicher als bei niedrigen Temperaturen und somit einfacher zu fräsen. Daher sind beispielsweise an Tagen mit höherer Temperatur bei gleichbleibendem Material ggf. niedrigere Fräswalzendrehzahlen möglich als an kälteren Tagen. Folglich ist es aufgrund unterschiedlicher Einflussfaktoren im Fräsprozess nicht immer möglich, bereits im Vorfeld der Fräsarbeiten die optimale Fräswalzendrehzahl festzulegen, bei der ein möglichst niedriger Verschleiß und ein optimales Fräsbild bei größtmöglichem Vorschub der Baumaschine gewährleistet wird, aber das Auftreten eines kritischen Betriebszustands der Walze verhindert wird.

Sämtliche der im Stand der Technik bekannten Baumaschinen zeichnen sich dadurch aus, dass zur Vermeidung eines kritischen Betriebszustands der Fräswalze infolge einer zu großen Belastung die Vorschubgeschwindigkeit der Baumaschine reduziert wird. Dadurch wird die Arbeitsleistung der Maschine unnötig herabgesetzt, wenn der kritische Betriebszustand nicht anderweitig zu vermeiden gewesen wäre. Eine Erhöhung der Belastung der Fräswalze führt bei den bekannten Baumaschinen zu einer Verringerung der Vorschubgeschwindigkeit, während die Drehzahl der Fräswalze aufrechterhalten wird. Dabei wird die Fräswalzendrehzahl regelmäßig zu hoch voreingestellt, um unter allen Betriebsbedingungen das Auftreten des kritischen Betriebszustands zu vermeiden.

Die EP 2 354 310 A2 (US 8,128,177 B2) befasst sich mit dem Problem unerwünschter Fahrbewegungen einer Straßenfräsmaschine durch Regelung des Fahrantriebs in Abhängigkeit von auf die Fräswalze wirkenden Reaktionskräften. Zur Erfassung dieser Reaktionskräfte werden verschiedene Sensoren vorgeschlagen, insbesondere Sensoren zur Messung von Verformungen einzelner Maschinenbauteile, insbesondere der Fräswalze, oder des Drucks im Hydrauliksystem, beispielsweise des Hydraulikdrucks in den Hubzylindern zur Höhenverstellung des Maschinenrahmens. Wenn die mit den Sensoren erfasste Messgröße einen kritischen Wert übersteigt, wird die Vorschubgeschwindigkeit der Baumaschine reduziert. Die Drehzahl der Fräswalze wird hingegen aufrechterhalten.

Eine Straßenbaumaschine, bei der die Vorschubgeschwindigkeit in Abhängigkeit von einem für einen Betriebszustand der Baumaschine charakteristischen Parameter geregelt wird, ist auch aus der US 6,921,230 B2 bekannt.

Die WO 03/064770 A1 beschreibt eine Straßenfräsmaschine, die über Sensoren zur Erfassung eines Betriebszustands der Fräswalze verfügt. Neben Dehnungs-Messstreifen zur Erfassung des Betriebszustands wird auch eine Signalaufnahmeeinheit vorgeschlagen, die Schwingungen an Maschinenbauteilen erfasst. Die Schwingungen der Fräswalze werden gemessen, um den Verschleißzustand der Fräswalze zu ermitteln. Dabei wird davon ausgegangen, dass sich die von neuen Fräsmeißeln verursachten Schwingungen von den Schwingungen verschlissener Fräsmeißel in Amplitude und/oder Frequenz unterscheiden.

Aus der US 2008/0173740 A1 ist bekannt, die Vorschubgeschwindigkeit der Straßenfräsmaschine und die Drehzahl der Fräswalze derart zu regeln, dass zwischen Vorschubgeschwindigkeit und Fräswalzendrehzahl ein vorgegebenes Verhältnis besteht.

Schließlich beschreibt die DE 102 13 017 A1 ein Verfahren zur Optimierung eines Fräsprozesses bei Straßenfräsmaschinen, bei dem ein für die Arbeitsleistung der Fräswalze repräsentativer Kennwert ermittelt wird, um die Menge an Kühlflüssigkeit für die Fräswerkzeuge zu steuern.

Zu Beginn der Arbeiten muss der Maschinenführer eine bestimmte Vorschubgeschwindigkeit für die Baumaschine und eine bestimmte Drehzahl für die Fräswalze vorgeben. Im Hinblick auf die oben genannten Bedingungen erfordert die Vorgabe der Vorschubgeschwindigkeit und der Fräswalzendrehzahl aber in der Praxis vom Maschinenführer eine erhöhte Aufmerksamkeit. In der Praxis kann es vorkommen, dass der Maschinenführer aus Sicherheitsgründen oder auch aus Bequemlichkeit einfach eine Fräswalzendrehzahl vorgibt, die höher als notwendig gewählt wird. Dies führt zu den oben genannten Nachteilen.

Der Erfindung liegt die Aufgabe zugrunde, eine selbstfahrende Baumaschine zu schaffen, die sich zuverlässig bei unterschiedlichen Betriebsbedingungen mit hoher Effizienz betreiben lässt. Darüber hinaus ist eine Aufgabe der Erfindung, ein Verfahren anzugeben, mit dem sich eine selbstfahrende Baumaschine zuverlässig bei unterschiedlichen Betriebsbedingungen mit hoher Effizienz betreiben lässt.

Die Lösung dieser Aufgaben erfolgt erfindungsgemäß mit den Merkmalen der unabhängigen Ansprüche. Die abhängigen Ansprüche betreffen vorteilhafte Ausführungsformen der Erfindung.

Die erfindungsgemäße selbstfahrende Baumaschine, insbesondere Straßenfräsmaschine, Recycler, Stabilisierer oder Surface-Miner, weist einen Maschinenrahmen auf, der von einem Fahrwerk getragenen wird, das Räder oder Laufwerke aufweist. An dem Maschinenrahmen ist eine Fräswalze angeordnet. Die Räder oder Laufwerke und die Fräswalze werden von einer Antriebseinheit angetrieben. Die Antriebseinheit kann eine Einrichtung sein, die beispielsweise einen Verbrennungsmotor, insbesondere Dieselmotor, und beispielsweise zwei Antriebsstränge zur Übertragung der Antriebsleistung von dem Verbrennungsmotor auf die Räder oder Laufwerke und die Fräswalze umfasst. Die beiden unabhängigen Antriebsstränge können eigene Getriebe aufweisen, so dass sich die Räder oder Laufwerke unabhängig von der Fräswalze bewegen lassen. Die Antriebseinheit kann auch ein Hydraulikgetriebe zum Antrieb weiterer Aggregate der Baumaschine umfassen, beispielsweise hydraulische Hubeinrichtungen zur Höhenverstellung des Maschinenrahmens. Unter einer Antriebseinheit wird auch eine Anordnung verstanden, die mehrere Antriebsaggregate umfasst, beispielsweise getrennte Antriebsaggregate für die Räder oder Laufwerke und den Antrieb der Fräswalze.

Darüber hinaus verfügt die Baumaschine über eine Steuereinheit zum Steuern der Antriebseinheit und eine Signalaufnahmeeinheit zur Erfassung mindestens einer für einen Betriebszustand der Fräswalze charakteristischen Messgröße.

Die erfindungsgemäße Baumaschine zeichnet sich dadurch aus, dass die Steuereinheit derart konfiguriert ist, dass die Drehzahl der Fräswalze in Abhängigkeit von mindestens einer für einen kritischen Betriebszustand der Fräswalze charakteristischen Messgröße an die Betriebsbedingungen der Baumaschine derart angepasst wird, dass die Fräswalze in einem nicht kritischen Betriebszustand betrieben wird.

Die Betriebsbedingungen der Baumaschine können vorgegebene Parameter sein, beispielsweise die Vorschubgeschwindigkeit oder Frästiefe. Diese Paramater können während des Betriebs der Baumaschine konstant sein oder auch verändert werden. Für die Anpassung der Fräswalzendrehzahl ist die Vorschubgeschwindigkeit der Baumaschine von besonderer Bedeutung. Die Vorschubgeschwindigkeit, an die die Fräswalzendrehzahl angepasst werden kann, kann eine vom Maschinenführer vorgegebene Vorschubgeschwindigkeit sein, die der Maschinenführer während des Betriebs der Baumaschine verändern kann. Die Vorschubgeschwindigkeit kann aber auch von einer Steuerungs- oder Regelungseinrichtung der Baumaschine vorgegeben werden. Während der Anpassung der Fräswalzendrehzahl braucht die Vorschubgeschwindigkeit nicht konstant zu sein, sondern kann sich aufgrund der Vorgabe durch den Maschinenführer oder der Steuerung bzw. Regelung auch verändern. Entscheidend ist, dass die Vorschubgeschwindigkeit nicht in Abhängigkeit von der für den Betriebszustand der Fräswalze charakteristischen Größe, sondern in Abhängigkeit von anderen Größen gesteuert oder geregelt wird, sofern eine Regelung oder Steuerung der Vorschubgeschwindigkeit überhaupt erfolgt.

Während im Stand der Technik eine bestimmte Fräswalzendrehzahl vorgegeben wird, die sich zum Beispiel am optimalen Betriebspunkt der Antriebseinheit orientiert, und bei Auftreten eines Überlastzustandes die Vorschubgeschwindigkeit der Baumaschine reduziert wird, sieht die erfindungsgemäße Baumaschine eine adaptive Steuerung oder Regelung der Fräswalzendrehzahl vor. Zur Erkennung eines kritischen Betriebszustands können eine oder mehrere charakteristischen Messgrößen ausgewertet werden. Dabei können verschiedene Auswertalgorithmen Anwendung finden. Aus diesem grundlegend unterschiedlichen Funktionsprinzip der erfindungsgemäßen Steuerung ergeben sich gegenüber dem Stand der Technik die folgenden Vorteile.

Die adaptive Steuerung der Fräswalzendrehzahl erlaubt den Betrieb der Baumaschine im Hinblick auf die Fräswalzendrehzahl in einem optimalen Arbeitspunkt. Die Fräswalzendrehzahl braucht nicht zuvor auf einen bestimmten Wert eingestellt zu werden, der im vorhinein als optimal angesehen wird, sondern wird automatisch an die Betriebsbedingungen der Baumaschine angepasst, ohne dass die Gefahr besteht, dass die Fräswalze in einen kritischen Betriebszustand gelangen kann. Bei dieser Steuerung wird die Vorschubgeschwindigkeit von dieser Steuerung nicht beeinflusst, obgleich sich die Vorschubgeschwindigkeit auch aufgrund einer anderen Steuerung bzw. Regelung oder Vorgabe durch den Maschinenführer verändern kann. Dadurch kann sich die Arbeitsleistung der Baumaschine zumindest nicht verringern. Die Baumaschine kann also mit einer möglichst niedrigen Fräswalzendrehzahl betrieben werden. Daraus ergibt sich ein geringer Verschleiß der Fräswerkzeuge sowie ein geringerer Kraftstoff- und Kühlmittelverbrauch. Die Anpassung der Fräswalzendrehzahl kann zu Beginn der Fräsarbeiten beim Ansetzen der Baumaschine erfolgen, so dass die Fräsarbeiten mit der optimalen Fräswalzendrehzahl durchgeführt werden, oder kann während der Fräsarbeiten als Reaktion auf sich ändernde Betriebsbedingungen erfolgen.

Eine bevorzugte Ausführungsform der Erfindung sieht vor, dass die Steuereinheit derart konfiguriert ist, dass die Drehzahl der Fräswalze erhöht wird, wenn die mindestens eine für den Betriebszustand der Fräswalze charakteristische Messgröße einen kritischen Grenzwert überschreitet, so dass die Fräswalze in einem nicht kritischen Betriebszustand betrieben wird. Dabei kann die Drehzahl der Fräswalze von einem vorgegebenen Wert stufenweise oder kontinuierlich solange erhöht werden, bis die mindestens eine für den Betriebszustand der Fräswalze charakteristische Messgröße den kritischen Grenzwert um einen vorgegebenen Toleranzwert unterschreitet.

Der Maschinenführer kann mit der erfindungsgemäßen Steuerung vor Beginn der Arbeiten einen beliebigen, möglichst niedrigen Wert für die Fräswalzendrehzahl vorgeben, ohne sich über das Auftreten eines kritischen Betriebszustands Gedanken machen zu müssen. Dieser Wert kann aber auch ein bereits von der Steuerung festgelegter Wert sein, der vom Maschinenführer nicht vorgegeben zu werden braucht. Die erfindungsgemäße Steuerung bewirkt dann, dass für die Fräsarbeiten eine möglichst niedrige Fräswalzendrehzahl automatisch eingestellt wird. Die Fräswalzendrehzahl wird auf einen Wert eingestellt, bei dem mindestens eine für den Betriebszustand der Fräswalze charakteristische Messgröße den kritischen Grenzwert um einen vorgegebenen Toleranzwert unterschreitet. Dieser Toleranzwert kann auch Null sein. Auch der kritische Grenzwert kann Null sein. Im einfachsten Fall wird davon ausgegangen, dass ein stabiler Betriebszustand der Fräswalze vorliegt, wenn die charakteristische Messgröße Null ist, d. h. nicht nachweisbar bzw. messbar ist, und dass der Betriebszustand instabil ist, wenn die charakteristische Messgröße größer Null ist, d. h. messbar ist. Vorteilhaft ist aber, wenn ein Toleranzwert berücksichtigt wird.

Für den umgekehrten Fall, dass als Startwert eine zu hohe Fräswalzendrehzahl vorgegeben wird, die oberhalb des Wertes liegt, bei dem ein kritischer Betriebszustand auftritt, kann die Anpassung der Fräswalzendrehzahl auch dadurch erfolgen, dass die Drehzahl der Fräswalze ausgehend von einem zu hohen Wert stufenweise oder kontinuierlich verringert wird, solange die mindestens eine für den Betriebszustand der Fräswalze charakteristische Messgröße noch einen kritischen Grenzwert unterschreitet, so dass die Fräswalze ggf. unter Berücksichtigung eines Toleranzwertes noch in einem unkritischen Betriebszustand betrieben wird.

Für die Eingabe der Fräswalzendrehzahl durch den Maschinenführer ist vorzugsweise eine Eingabeeinheit vorgesehen, mit der der Maschinenführer beispielsweise unter vorgegebenen Werten einen Vorgabewert auswählen kann.

Eine besonders bevorzugte Ausführungsform sieht vor, dass die Steuereinheit derart konfiguriert ist, dass nach der Anpassung der Drehzahl zum Betrieb der Fräswalze in einem nicht kritischen Betriebszustand die Drehzahl der Fräswalze reduziert wird und überprüft wird, ob nach der Reduzierung der Drehzahl die mindestens eine für den Betriebszustand der Fräswalze charakteristische Messgröße den kritischen Grenzwert um einen vorgegebenen Toleranzwert noch unterschreitet. Die reduzierte Drehzahl wird dann beibehalten, wenn nach der Reduzierung der Drehzahl die mindestens eine für den Betriebszustand der Fräswalze charakteristische Messgröße den kritischen Grenzwert um einen vorgegebenen Toleranzwert unterschreitet. Ansonsten wird die Drehzahl wieder erhöht. Die laufende Anpassung der Fräswalzendrehzahl kann in bestimmten Zeitintervallen oder nach Zurücklegung bestimmter Wegstrecken erfolgen. Eine Anpassung der Fräswalzendrehzahl kann auch zu den Zeitpunkten erfolgen, zu denen sich die betreffenden Betriebsbedingungen, beispielsweise Vorschubgeschwindigkeit oder Frästiefe, verändert haben. Eine erneute Anpassung wird aber dann nicht erforderlich sein, wenn davon auszugehen ist, dass sich die Betriebsbedingungen nicht oder nicht wesentlich ändern, beispielsweise der abzufräsende Straßenbelag weitgehend die gleichen Materialeigenschaften hat und der Vorschub und die Frästiefe im Wesentlichen konstant bleiben.

Ein Aspekt der Erfindung liegt darin, während des Betriebs der Baumaschine in einem zuvor optimalen Betriebspunkt nach einer Änderung der Betriebs- oder Arbeitsbedingungen einen Eingriff in die Maschinensteuerung vorzunehmen, um den optimalen Betriebspunkt wieder einzustellen. Die Steuereinheit sieht vorzugsweise einen Sollwert-Steuermodus vor, in dem sich die Baumaschine mit einer bestimmten Vorschubgeschwindigkeit bewegt und die Fräswalze sich mit einer bestimmten Drehzahl dreht. Diese Vorschubgeschwindigkeit kann eine manuell vorgegebene oder eine von einer Steuerung bzw. Regelung vorgegebene Geschwindigkeit sein, die konstant sein oder sich auch verändern kann. Darüber hinaus sieht die Steuereinheit einen adaptiven Steuermodus vor, in dem sich die Baumaschine mit der Vorschubgeschwindigkeit bewegt und die Fräswalze sich mit einer Drehzahl dreht, die derart angepasst ist, dass die Fräswalze in einem nicht kritischen Betriebszustand betrieben wird. Die Steuereinheit ist derart konfiguriert, dass diese von dem Sollwert-Steuermodus in den adaptiven Steuermodus in Abhängigkeit von der mindestens einen für einen kritischen Betriebszustand der Fräswalze charakteristischen Messgröße übergeht. Dadurch wird erreicht, dass die Fräswalzendrehzahl unabhängig von einer möglicherweise bereits bestehenden anderen Steuerung oder Regelung der Vorschubgeschwindigkeit dann angepasst wird, wenn sich die Arbeitsbedingungen verändert haben. Die Fräswalzendrehzahl ist in dem adaptiven Steuermodus beispielsweise höher als die zuvor eingestellte Drehzahl, wenn das zu bearbeitende Material härter und die Belastung der Fräswalze größer geworden ist.

Für die erfindungsgemäße Steuerung ist grundsätzlich unerheblich, wie die für den kritischen Betriebszustand der Fräswalze charakteristische Messgröße erfasst wird.

Eine bevorzugte Ausführungsform sieht zur Erfassung des kritischen Betriebszustands eine Signalaufnahmeeinheit vor, die mindestens einen Sensor zur Erfassung von Vibrationen oder Stößen aufweist. Hierzu kann der dabei verwendete Sensor beispielsweise Wege, Geschwindigkeiten oder Beschleunigungen erfassen. Dabei wird davon ausgegangen, dass die Fräswalze in einem kritischen Betriebszustand Vibrationen oder Stößen ausgesetzt ist bzw. verursacht, die sich auf den Maschinenrahmen übertragen. Diese Vibrationen oder Stöße können grundsätzlich an sämtlichen Bauteilen der Baumaschine nachgewiesen werden. Hierzu gehören auch der Kantenschutz oder der Abstreifer der bekannten Straßenfräsmaschinen, die sich in einem kritischen Betriebszustand der Fräswalze ruckartig auf und ab bewegen können. Folglich können zur Erfassung der Höhe des Kantenschutzes oder Abstreifers ggf. bereits vorhandene Sensoren als Sensoren zur Erfassung von Vibrationen oder Stößen dienen. Vibrationen oder Stöße können sich auch durch Verformungen der Bauteile nachweisen lassen. Insofern können auch Sensoren Verwendung finden, die beispielsweise Änderungen in der Spannung von Bauteilen erfassen.

Darüber hinaus kann die für den kritischen Betriebszustand der Fräswalze charakteristische Messgröße eine mit Druckschwankungen des Hydraulikdrucks in einem Hydrauliksystem der Baumaschine korrelierende Messgröße sein. Ferner können Drehzahlschwankungen des Antriebsmotors, insbesondere Verbrennungsmotors, von rotierenden Bauteilen im Antriebsstrang der Räder oder Laufwerke und/oder im Antriebsstrang der Fräswalze erfasst werden.

Die für die Erfassung der charakteristischen Messgröße geeigneten Sensoren sind dem Fachmann bekannt. Beispielsweise können Beschleunigungsaufnehmer, Dehnungsmessstreifen, Drucksensoren, Drehgeber, Drehzahlsensoren etc. an Bauteilen der Baumaschine angeordnet werden. Zur Absicherung der Messergebnisse können auch die Messsignale mehrerer gleicher und/oder mehrerer unterschiedlicher Sensoren ausgewertet werden, die an denselben oder unterschiedlichen Bauteilen angeordnet werden können.

Im Folgenden wird ein Ausführungsbeispiel der Erfindung unter Bezugnahme auf die Zeichnungen im Einzelnen erläutert. Es zeigen:
- Fig. 1: als Beispiel für eine selbstfahrende Baumaschine eine Straßenfräsmaschine in der Seitenansicht,
- Fig. 2: die Antriebseinheit zum Antrieb der Laufwerke oder Räder und die Steuereinheit für die Antriebseinheit der selbstfahrenden Baumaschine in vereinfachter schematischer Darstellung,
- Fig. 3: die für den Betriebszustand der Fräswalze charakteristische Messgröße vor und nach dem Auftreten eines kritischen Betriebszustands der Fräswalze, und
- Fig. 4A bis Fig. 4B: die charakteristische Messgröße und die Fräswalzendrehzahl bei einem weiteren Ausführungsbeispiel einer Steuerung der Fräswalzendrehzahl.

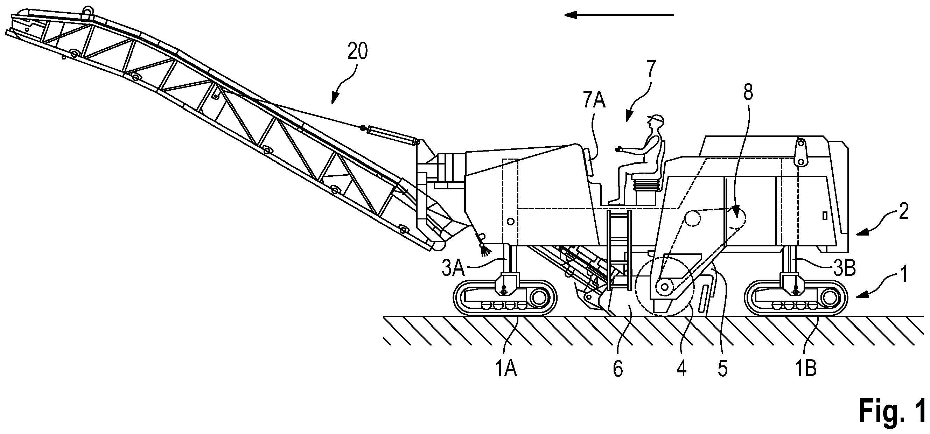

Fig. 1 zeigt als Beispiel für eine selbstfahrende Baumaschine eine Straßenfräsmaschine zum Abfräsen von Straßenbelägen aus Asphalt, Beton oder dergleichen. Die Straßenfräsmaschine weist einen von einem Fahrwerk 1 getragenen Maschinenrahmen 2 auf. Das Fahrwerk 1 der Fräsmaschine umfasst vordere und hintere Kettenlaufwerke 1A, 1B, die an der in Arbeitsrichtung rechten und linken Seite des Maschinenrahmens 2 angeordnet sind. Anstelle von Kettenlaufwerken können auch Räder vorgesehen sein. Die Kettenlaufwerke 1A, 1B sind an Hubsäulen 3A, 3B befestigt, die am Maschinenrahmen 2 angebracht sind, so dass der Maschinenrahmen gegenüber dem Boden in der Höhe verstellbar ist.

Die Straßenfräsmaschine verfügt über eine Fräswalze 4, die mit nicht dargestellten Fräswerkzeugen bestückt ist. Die Fräswalze 4 ist am Maschinenrahmen 2 zwischen den vorderen und hinteren Kettenlaufwerken 1A, 1B in einem Fräswalzengehäuse 5 angeordnet, das an den Längsseiten von einem Kantenschutz 6 und an der Rückseite von einem nicht dargestellten Abstreifer verschlossen ist. Das abgefräste Fräsgut wird mit einer Fördereinrichtung 20 abgeführt. Oberhalb des Fräswalzengehäuses 5 befindet sich am Maschinenrahmen 2 der Fahrstand 7 mit einem Bedienpult 7A für den Maschinenführer. Für den Antrieb der Fräswalze 4 verfügt die Fräsmaschine über eine Antriebseinheit 8, die einen Verbrennungsmotor 10 aufweist. Der Verbrennungsmotor 10 treibt neben der Fräswalze 4 auch die Kettenlaufwerke 1A, 1B oder Räder sowie weitere Aggregate der Fräsmaschine an.

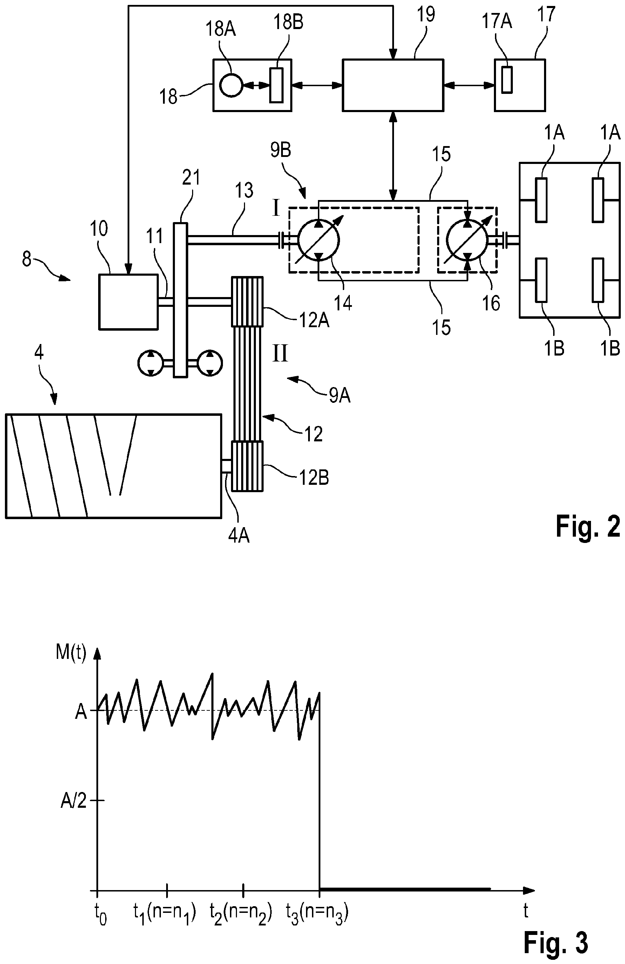

Fig. 2 zeigt die beiden Antriebsstränge zur Übertragung der Antriebsleitung von dem Verbrennungsmotor 10 auf die Laufwerke 1A, 1B oder Räder und die Fräswalze 4. In Fig. 2 sind die Kettenlaufwerke oder Räder nur andeutungsweise dargestellt.

Zur Übertragung der Antriebsleistung auf die Laufwerke 1A, 1B dient ein erster Antriebsstrang I, während zur Übertragung der Antriebsleistung auf die Fräswalze 4 ein zweiter Antriebsstrang II dient. Beide Antriebsstränge I und II umfassen jeweils ein Getriebesystem 9A, 9B. Die Abtriebswelle 11 des Verbrennungsmotors 10 ist über ein Pumpenverteilergetriebe 21 mit einem Antriebselement 12A eines Zugmittelgetriebes 12 verbunden, dessen Abtriebselement 12B mit der Antriebswelle 4A der Fräswalze 4 verbunden ist. Folglich wird die Fräswalze 4 von dem Verbrennungsmotor 10 über das Zugmittelgetriebe 12 angetrieben, wobei die Drehzahl n der Fräswalze 4 über die Drehzahl des Verbrennungsmotors 10 gesteuert werden kann. Alternativ kann dies auch über ein weiteres schaltbares oder stufenloses Getriebe erfolgen.

Der Fahrantrieb ist bei der Fräsmaschine ein hydraulischer Antrieb. Das Pumpenverteilergetriebe 21 ist über eine Welle 13 mit einer Hydropumpe 14 verbunden, deren Volumenstrom in Abhängigkeit von einem Steuersignal einstellbar ist, so dass die Vorschubgeschwindigkeit der Baumaschine unabhängig von der Drehzahl des Antriebsmotors gesteuert werden kann. Die Hydropumpe 14 ist wiederum über Hydraulikleitungen 15 mit einem Hydromotor 16 verbunden, der die Kettenlaufwerke 1A, 1B antreibt. Derartige Antriebssysteme sind dem Fachmann bekannt.

Der Maschinenführer kann mit einer Eingabeeinheit 17 am Bedienpult 7A eine bestimmte Vorschubgeschwindigkeit für die Baumaschine einstellen. Mit der Eingabeeinheit 17 kann der Maschinenführer auch eine bestimmte Drehzahl für die Fräswalze 4 einstellen. Beispielsweise kann der Maschinenführer mit einem Schalter 17A bestimmte Fräswalzendrehzahlen n₁, n₂, n₃ etc. auswählen. Die Steuerung der Antriebseinheit 8 sieht neben dem Betriebsmodus, in dem die Drehzahl der Fräswalze freivorgegeben werden kann, auch einen Betriebsmodus vor, in dem die Fräswalzendrehzahl automatisch an die unterschiedlichen Arbeitsbedingungen der Baumaschine angepasst wird. Dieser adaptive Betriebsmodus kann auf der Eingabeeinheit 17 ausgewählt werden.

Die Baumaschine verfügt über eine Signalaufnahmeeinheit 18 zur Erfassung mindestens einer für den Betriebszustand der Fräswalze 4 charakteristischen Messgröße. Zur Erfassung der Messgröße weist die Signalaufnahmeeinheit 18 mindestens einen Sensor 18A auf, der in Fig. 2 exemplarisch für sämtliche Sensoren nur schematisch dargestellt ist. Bei dem vorliegenden Ausführungsbeispiel ist der Sensor 18A ein Beschleunigungsaufnehmer, der Schwingungen oder Stöße erfasst. Der Sensor kann an einem Bauteil der Baumaschine angeordnet sein, auf das sich die Schwingungen oder Stöße übertragen, die bei einem kritischen Betriebszustand der Fräswalze 4 auftreten, d. h. wenn die Fräswalze mit einer zu geringen Fräswalzendrehzahl betrieben wird. Bei dem vorliegenden Ausführungsbeispiel ist der Beschleunigungsaufnehmer 18A am Maschinenrahmen 2 befestigt. Der Beschleunigungsaufnehmer 18A kann aber auch an der Fräswalze oder dem Fräswalzengehäuse angeordnet sein. Aus dem Messsignal des Beschleunigungsaufnehmers 18A werden Störsignale mit einer Filtereinheit 18B entfernt, d. h. Schwingungen oder Stöße, die beispielsweise von dem Verbrennungsmotor 10 oder dem Fahrwerk 1 hervorgerufen werden. Die Filtereinheit 18B ist derart ausgebildet, dass die Störsignale, die sich in Amplitude und/oder Frequenz von der charakteristischen Messgröße unterscheiden, herausgefiltert werden.

Anstelle eines Beschleunigungsaufnehmers kann auch ein Dehnungssensor vorgesehen sein, mit dem Verformungen an Bauteilen der Baumaschine gemessen werden, die bei einem instabilen Betriebszustand auftreten. Bei dem vorliegenden Ausführungsbeispiel ist der Dehnungssensor an der Fräswalze 4 befestigt. Es können aber auch mindestens ein Beschleunigungsaufnehmer und ein Dehnungssensor vorgesehen sein, wobei auf einen instabilen Betriebszustand geschlossen wird, wenn mit dem Beschleunigungsaufnehmer Schwingungen oder Stöße und/oder mit dem Dehnungssensor Verformungen erfasst werden.

Die Steuereinheit 19 für die Antriebseinheit 8 verfügt über eine Datenverarbeitungseinheit (Mikroprozessor), auf der ein Datenverarbeitungsprogramm (Software) läuft, so dass die nachfolgend beschriebenen Verfahrensschritte ausgeführt werden.

Bei einem ersten Ausführungsbeispiel gibt der Maschinenführer vor Beginn der Fräsarbeiten eine Vorschubgeschwindigkeit für die Baumaschine vor. Wenn der Maschinenführer den adaptiven Betriebsmodus auswählt, steuert die Steuereinheit 19 die Antriebeinheit 8 derart, dass sich die Baumaschine mit der vorgegebenen Vorschubgeschwindigkeit v bewegt und sich die Fräswalze 4 mit einer bestimmten Drehzahl n dreht. Die von der Steuereinheit 19 fest vorgegebene Fräswalzendrehzahl, die auch vom Maschinenführer frei vorgegeben werden könnte, liegt bei dem vorliegenden Ausführungsbeispiel unterhalb der für einen unkritischen Betriebszustand erforderlichen Drehzahl.

Der Sensor 18A der Signalaufnahmeeinheit 18 erfasst Vibrationen oder Stöße, die bei einer zu geringen Fräswalzendrehzahl auftreten. Diese charakteristische Messgröße M(t) wird in der Steuereinheit 19 ausgewertet. Die Steuereinheit 19 erhöht die Drehzahl der Fräswalze 4 von dem vorgegebenen Wert stufenweise oder kontinuierlich solange, bis die charakteristische Messgröße einen kritischen Grenzwert um einen vorgegebenen Toleranzwert unterschreitet.

Zunächst wird unter Bezugnahme auf Fig. 3 ein Ausführungsbeispiel beschrieben, bei dem davon ausgegangen wird, dass der Mittelwert der charakteristischen Messgröße bei einem kritischen Betriebszustand A ist und bei einem unkritischen Betriebszustand idealerweise 0 ist, aber auch größer als 0 sein kann, wobei der Übergang von einem kritischen zu einem unkritischen Zustand sprunghaft ist, d. h. die Messgröße sprunghaft auf Null oder einen als unkritisch angesehenen Wert größer Null abfällt. Die charakteristische Messgröße M(t) ist in Fig. 3 als Funktion der Zeit für den Fall dargestellt, dass in dem Zeitintervall t < t₃ die Fräswalze 4 mit einer zu geringen Drehzahl (n₁ oder n₂) betrieben wird und zu dem Zeitpunkt t = t₃ oder in dem Zeitintervall t > t₃ mit einer Drehzahl n₃ betrieben wird, bei der ein kritischer Betriebszustand nicht auftritt. Als kritischer Grenzwert wird ein Wert kleiner als A angenommen, beispielsweise A/2. Die Drehzahl n der Fräswalze wird von dem vorgegebenen Wert stufenweise n₁, n₂, n₃ ... nₙ oder kontinuierlich erhöht. Zu dem Zeitpunkt t = t₃ hat die Drehzahl einen Wert n₃ erreicht, bei dem die charakteristische Messgröße 0 ist, d. h. die charakteristische Messgröße hat den Grenzwert A/2 um einen vorgegebenen Toleranzwert (A/2) unterschritten. Zu diesem Zeitpunkt t₃ ist der Betriebszustand stabil. Ein unkritischer Betriebszustand kann auch dann angenommen werden, wenn die Messgröße größer als 0, aber kleiner als der kritische Grenzwert ist, beispielsweise A/8 ist. In diesem Fall kann der Toleranzwert beispielsweise A/4 sein. Der Übergang von dem kritischen zu dem unkritischen Zustand kann auch kontinuierlich sein. Die Steuereinheit 19 stellt nunmehr die Drehzahl n₃ als Soll-Drehzahl für die Fräswalze ein. Dies ist der optimale Arbeitspunkt. Zur Erhöhung der Sicherheit kann als Soll-Drehzahl auch eine Drehzahl (n = n₃ + Δn) eingestellt werden, die um einen vorgegebenen Betrag Δn größer als die ermittelte Drehzahl n₃ ist.

Bei dem Ausführungsbeispiel wird davon ausgegangen, dass der Übergang von einem kritischen in einen unkritischen Betriebszustand oder umgekehrt sprunghaft ist. Es ist aber auch möglich, dass dieser Übergang kontinuierlich ist. Dann wird der Mittelwert A der charakteristischen Messgröße M(t) in einem Übergangsbereich von einem instabilen in einen stabilen Zustand kontinuierlich abnehmen. In diesem Fall kann mit der Auswahl eines geeigneten Toleranzwertes die Fräswalzendrehzahl ermittelt werden, bei der ein ausreichend stabiler Zustand angenommen werden kann, d. h. die charakteristische Messgröße einen ausreichenden Abstand zu dem kritischen Grenzwert hat.

Die Baumaschine bewegt sich nunmehr mit der vorgegebenen Vorschubgeschwindigkeit vₛₒₗₗ, wobei die Fräswalze 4 mit der optimalen Drehzahl n₃=nₛₒₗₗ rotiert. Diese Fräswalzendrehzahl kann für das Arbeitsvorhaben grundsätzlich beibehalten werden, wenn davon ausgegangen wird, dass die Arbeitsbedingungen unverändert bleiben, beispielsweise sich die Materialeigenschaften des Bodenmaterials nicht ändern und auch die Frästiefe oder der Vorschub nicht geändert wird. Andernfalls kann eine Korrektur der Fräswalendrehzahl erforderlich sein.

Wenn die Frästiefe sich erhöht, der Vorschub gesteigert wird oder das abzufräsende Material härter werden sollte, wird wieder ein kritischer Betriebszustand erkannt, was mit der oben beschriebenen Routine zu einer weiteren Erhöhung der Fräswalzendrehzahl führt.

Wenn das Material hingegen weicher werden sollte, ist die Fräswalzendrehzahl nicht mehr optimal, d. h. die Fräswalzendrehzahl ist zu hoch, was mit der obigen Routine nicht erkannt wird. Für diesen Fall kann vorgesehen sein, dass die Steuereinheit 19 die Fräswalzendrehzahl sukzessive reduziert und jeweils überprüft, ob nach der Reduzierung der Drehzahl noch die mindestens eine für den Betriebszustand der Fräswalze charakteristische Messgröße M(t) den kritischen Grenzwert um einen vorgegebenen Toleranzwert unterschreitet. Die reduzierte Drehzahl wird dann als angepasste oder korrigierte Soll-Drehzahl beibehalten, wenn die obige Bedingung vorliegt. Ansonsten wird die Drehzahl wieder erhöht. Die Reduzierung der Fräswalzendrehzahl kann beispielsweise nach Ablauf eines vorgegebenen Zeitintervalls oder nach Zurücklegen einer vorgegebenen Wegstrecke stufenweise oder kontinuierlich erfolgen. Die Fräswalzendrehzahl kann auch nach der Änderung anderer Parameter an die geänderten Parameter angepasst werden, z. B. an eine geänderte Vorschubgeschwindigkeit oder Frästiefe.

Bei einer alternativen Ausführungsform wird die Vorschubgeschwindigkeit nicht vom Maschinenführer, sondern von einer Steuer- oder Regeleinrichtung vorgegeben, die Teil der Steuereinheit 19 sein kann. Diese Steuerung bzw. Regelung der Vorschubgeschwindigkeit, die nach den bekannten Verfahren erfolgen kann, erfolgt aber nicht in Abhängigkeit von der für den kritischen Betriebszustand der Fräswalze charakteristischen Größe. Die erfindungsgemäße Anpassung der Fräswalzendrehzahl erfolgt dann unabhängig von dieser Steuerung bzw. Regelung.

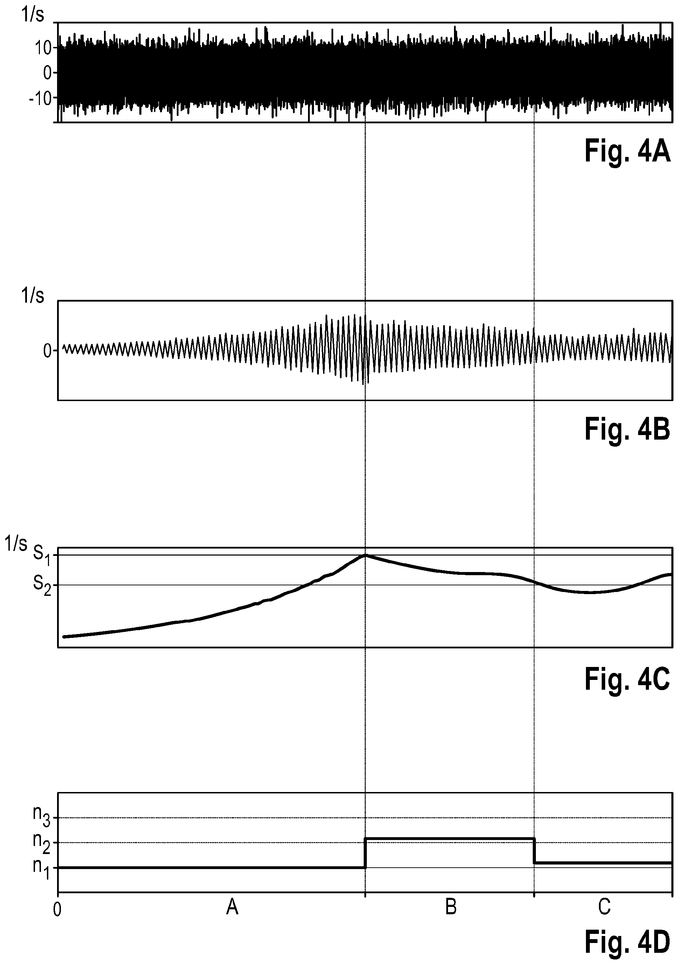

Unter Bezugnahme auf die Figuren 4A bis 4D wird ein weiteres Ausführungsbeispiel beschrieben, bei dem ein oberer und unterer Grenzwert für den Effektivwert der charakteristischen Messgröße M(t) festgelegt wird.

Fig. 4A zeigt das verrauschte Ausgangssignal des Sensors 18A, beispielsweise eines Beschleunigungssensors, als Funktion der Zeit. Die charakteristische Messgröße M(t) ist in dem Ausgangssignal des Sensors 18A von verschiedenen Störgrößen überlagert. Die Filtereinheit 18B verfügt über einen Bandpassfilter, der nur Signale in einem Frequenzband von beispielsweise 0,25 bis 20 Hz, insbesondere 0,5 bis 10 Hz, passieren lässt. Fig. 4B zeigt das von dem Rauschen befreite Ausgangssignal des Bandpassfilters.

Die Filtereinheit 18B weist weiterhin eine Einheit zur Bestimmung des Effektivwertes des Ausgangssignals des Bandpassfilters auf. Der Effektivwert des Ausgangssignals des Bandpassfilters stellt die charakteristische Messgröße M(t) dar (Fig. 4C).

Die Fräswalze 4 rotiert in dem Zeitintervall A zunächst mit einer vorgegebenen Drehzahl n₁ (Fig. 4D). Es zeigt sich, dass die Messgröße M(t) in dem Zeitintervall A kontinuierlich ansteigt, was auf das Eintreten eines instabilen Zustandes schließen lässt (Fig. 4C). Der Anstieg der Messgröße M(t) kann auf sich verändernde Arbeitsbedingungen, beispielsweise einer Veränderung der Beschaffenheit des abzufräsenden Straßenbelages, zurückzuführen sein. Die Messgröße M(t) kann aber auch infolge einer Erhöhung der Vorschubgeschwindigkeit in dem Zeitintervall A ansteigen, die von einer anderen Steuerung oder Regelung vorgegeben wird, die nicht auf der Überwachung der Messgröße M(t) beruht. Zu dem Zeitpunkt t₁, zu dem die charakteristische Messgröße M(t) einen oberen kritischen Grenzwert S₁ erreicht bzw. überschritten hat, wird die Drehzahl n der Fräswalze 4 bei dem vorliegenden Ausführungsbeispiel stufenweise von n₁ auf n₂ erhöht, um wieder einen nicht kritischen Betriebszustand der Fräswalze herzustellen. Es zeigt sich, dass die Messgröße M(t) aufgrund der Drehzahlerhöhung unter den oberen kritischen Grenzwert abfällt. Die Fräswalze 4 wird in dem Zeitintervall B nunmehr mit der erhöhten Drehzahl n₂ betrieben, wobei die Messgröße M(t) kontinuierlich abfällt. Bei diesem Ausführungsbeispiel fällt die Messgröße M(t) aber nicht sprunghaft auf Null ab wie in dem Ausführungsbeispiel von Fig. 3. Sollte die Messgröße M(t) allerdings nicht abfallen, sondern wieder den oberen kritischen Grenzwert S₁ erreichen bzw. überschreiten, wird die Drehzahl n wieder um eine weitere Stufe auf eine Drehzahl n₃ erhöht. Diese stufenweise Erhöhung kann sukzessive solange erfolgen, bis der obere kritische Grenzwert S₁ nicht mehr erreicht bzw. überschritten wird. Folglich ist nicht die Vorschubgeschwindigkeit der Fräsmaschine, sondern die Fräswalzendrehzahl die Korrekturgröße für die Herstellung eines unkritischen Betriebszustands der Fräswalze.

Fig. 4C zeigt den Fall, dass eine Erhöhung der Fräswalzendrehzahl n von n₁ auf n₂ ausreichend ist. Es zeigt sich, dass die Messgröße M(t) nach der Anpassung der Fräswalzendrehzahl n absinkt, bis sie einen unteren Grenzwert S₂ erreicht bzw. unterschritten hat, der als unkritisch angesehen wird. Wenn die Fräswalzendrehzahl den unteren Grenzwert S₂ erreicht bzw. unterschritten hat, wird die Drehzahl n der Fräswalze 4 wieder auf den Wert n₁ verringert. In dem nachfolgenden Zeitintervall C wird die Fräswalzendrehzahl n₁ beibehalten, wobei die Messgröße M(t) wieder langsam ansteigt, aber noch unterhalb des oberen kritischen Grenzwerts S₁ bleibt. Folglich wird ein oberer bzw. unterer Schaltpunkt für eine sprunghafte oder kontinuierliche Drehzahlerhöhung bzw. Drehzahlverringerung innerhalb eines vorgegebenen Toleranzbereichs festgelegt.

Ein besonderer Aspekt der Erfindung liegt darin, dass die Steuerung der Antriebseinheit der Baumaschine einen Sollwert-Steuermodus vorsieht, in dem die Baumaschine für bestimmte Arbeitsbedingungen in einem optimalen Arbeitspunkt betrieben werden kann.

In diesem Steuermodus bewegt sich die Baumaschine mit einer bestimmten Vorschubgeschwindigkeit, die vom Maschinenführer oder einer Steuerung oder Regelung vorgegeben werden kann, und die Fräswalze 4 dreht sich mit einer bestimmten Drehzahl. Von dem Sollwert-Steuermodus kann die Baumaschine in einen adaptiven Steuermodus übergehen, in dem sich die Baumaschine mit der Vorschubgeschwindigkeit bewegt und die Drehzahl der Fräswalze 4 derart angepasst wird, dass die Fräswalze in einem nicht kritischen Betriebszustand betrieben wird. Die Vorschubgeschwindigkeit der Baumaschine wird von dieser Steuerung nicht beeinflusst. Die Steuerung der Antriebseinheit 8 sieht vor, dass von dem Sollwert-Steuermodus in den adaptiven Steuermodus in Abhängigkeit von der für einen kritischen Betriebszustand der Fräswalze 4 charakteristischen Messgröße M(t) übergegangen wird. Dadurch wird erreicht, dass auch bei sich verändernden Arbeitsbedingungen ein kritischer Betriebszustand für die Fräswalze nicht auftreten kann. Wenn beispielsweise das zu bearbeitende Material härter wird, so dass die Belastung der Fräswalze zu hoch wird, geht die Baumaschine in den adaptiven Steuermodus über, in dem die Baumaschine mit einer höheren Drehzahl als die für das zuvor weichere Material vorgegebene Drehzahl bei unveränderter Vorschubgeschwindigkeit betrieben wird. Wenn das Material wieder weicher wird, kann die Baumaschine wieder in den Sollwert-Steuermodus übergehen.

## Patentansprüche

1. Selbstfahrende Baumaschine, insbesondere Straßenfräsmaschine, Recycler, Stabilisierer oder Surface-Miner, mit
einem Maschinenrahmen (2), der von einem Fahrwerk (1) getragen wird, das Räder oder Laufwerke (1A, 1B) aufweist,
einer an dem Maschinenrahmen (2) angeordneten Fräswalze (4),
einer Antriebseinheit (8) zum Antreiben der Räder oder Laufwerke (1A, 1B) und der Fräswalze (4),
einer Steuereinheit (19) zum Steuern der Antriebseinheit (8),
einer Signalaufnahmeeinheit (18) zur Erfassung mindestens einer für einen Betriebszustand der Fräswalze charakteristischen Messgröße (M(t)),
**dadurch gekennzeichnet, dass** die Steuereinheit (19) derart konfiguriert ist, dass die Drehzahl der Fräswalze (4) in Abhängigkeit von mindestens einer für einen kritischen Betriebszustand der Fräswalze charakteristischen Messgröße (M(t)) an die Betriebsbedingungen der Baumaschine derart angepasst wird, dass die Fräswalze in einem nicht kritischen Betriebszustand betrieben wird.

2. Selbstfahrende Baumaschine nach Anspruch 1, **dadurch gekennzeichnet, dass** die Steuereinheit (19) derart konfiguriert ist, dass die Drehzahl der Fräswalze erhöht wird, wenn die mindestens eine für den Betriebszustand der Fräswalze charakteristische Messgröße (M(t)) einen kritischen Grenzwert überschreitet, so dass die Fräswalze (4) in einem nicht kritischen Betriebszustand betrieben wird.

3. Selbstfahrende Baumaschine nach Anspruch 1 oder 2, **dadurch gekennzeichnet, dass** die Steuereinheit (19) derart konfiguriert ist, dass die Drehzahl der Fräswalze (4) von einem vorgegebenen Wert stufenweise solange erhöht wird, bis die mindestens eine für den Betriebszustand der Fräswalze charakteristische Messgröße (M(t)) den kritischen Grenzwert um einen vorgegebenen Toleranzwert unterschreitet oder die Drehzahl der Fräswalze von einem vorgegebenen Wert kontinuierlich solange erhöht wird, bis die mindestens eine für den Betriebszustand der Fräswalze charakteristische Messgröße (M(t)) den kritischen Grenzwert um einen vorgegebenen Toleranzwert unterschreitet.

4. Selbstfahrende Baumaschine nach Anspruch 3, **dadurch gekennzeichnet, dass** die Baumaschine eine Eingabeeinheit (17) zum Eingeben des vorgegebenen Wertes für die Drehzahl der Fräswalze (4) aufweist.

5. Selbstfahrende Baumaschine nach einem der Ansprüche 1 bis 4, **dadurch gekennzeichnet, dass** die Steuereinheit (19) derart konfiguriert ist, dass nach der Anpassung der Drehzahl der Fräswalze (4) zum Betrieb der Fräswalze in einem nicht kritischen Zustand die Drehzahl der Fräswalze reduziert wird und überprüft wird, ob nach der Reduzierung der Drehzahl die mindestens eine für den Betriebszustand der Fräswalze charakteristische Messgröße (M(t)) den kritischen Grenzwert um einen vorgegebenen Toleranzwert unterschreitet, wobei die reduzierte Drehzahl beibehalten wird, wenn nach der Reduzierung der Drehzahl die mindestens eine für den Betriebszustand der Fräswalze charakteristische Messgröße den kritischen Grenzwert um einen vorgegebenen Toleranzwert unterschreitet.

6. Selbstfahrende Baumaschine nach einem der Ansprüche 1 bis 5, **dadurch gekennzeichnet, dass** die Steuereinheit (19) einen Sollwert-Steuermodus vorsieht, in dem sich die Baumaschine mit einer bestimmten Vorschubgeschwindigkeit bewegt und die Fräswalze (4) sich mit einer bestimmten Drehzahl dreht, und einen adaptiven Steuermodus vorsieht, in dem sich die Baumaschine mit der Vorschubgeschwindigkeit bewegt und die Fräswalze sich mit einer Drehzahl dreht, die derart angepasst ist, dass die Fräswalze(4) in einem nicht kritischen Betriebszustand betrieben wird, wobei die Steuereinheit (19) von dem Sollwert-Steuermodus in den adaptiven Steuermodus in Abhängigkeit von der mindestens einen für einen kritischen Betriebszustand der Fräswalze (4) charakteristischen Messgröße übergeht.

7. Selbstfahrende Baumaschine nach einem der Ansprüche 1 bis 6, **dadurch gekennzeichnet, dass** die Signalaufnahmeeinheit (18) mindestens einen Sensor (18A) zur Erfassung von Vibrationen oder Stößen aufweist, die beim Betrieb der Fräswalze in einem kritischen Betriebszustand auftreten.

8. Selbstfahrende Baumaschine nach Anspruch 7, **dadurch gekennzeichnet, dass** der Sensor (18A) zur Erfassung von Vibrationen oder Stößen ein an einem Bauteil der Baumaschine angeordneter Beschleunigungsaufnehmer oder Dehnungssensor ist.

9. Selbstfahrende Baumaschine nach Anspruch 7 oder 8, **dadurch gekennzeichnet, dass** der Sensor (18A) zur Erfassung von Vibrationen oder Stößen an der Fräswalze (4), dem Fräswalzengehäuse (5) oder dem Maschinenrahmen (2) der Baumaschine angeordnet ist.

10. Selbstfahrende Baumaschine nach einem der Ansprüche 1 bis 6, **dadurch gekennzeichnet, dass** die Signalaufnahmeeinheit (18) mindestens einen in einem Hydrauliksystem der Baumaschine angeordneten Drucksensor zum Messen von Schwankungen des Hydraulikdrucks aufweist.

11. Selbstfahrende Baumaschine nach einem der Ansprüche 1 bis 6, **dadurch gekennzeichnet, dass** die Signalaufnahmeeinheit (18) derart ausgebildet ist, dass Drehzahlschwankungen von rotierenden Bauteilen im Antriebsstrang der Räder oder Laufwerke und/oder im Antriebsstrang der Fräswalze erfasst werden.

12. Verfahren zum Betreiben einer selbstfahrenden Baumaschine, insbesondere Straßenfräsmaschine, Recycler, Stabilisierer oder Surface-Miner, die aufweist:
einen Maschinenrahmen (2), der von einem Fahrwerk (1) getragen wird, das Räder oder Laufwerke aufweist,
eine an dem Maschinenrahmen (2) angeordnete Fräswalze (4),
**dadurch gekennzeichnet, dass** die Drehzahl der Fräswalze (4) in Abhängigkeit von mindestens einer für einen kritischen Betriebszustand der Fräswalze charakteristischen Messgröße (M(t)) an die Betriebsbedingungen der Baumaschine derart angepasst wird, dass die Fräswalze in einem nicht kritischen Betriebszustand betrieben wird.

13. Verfahren nach Anspruch 12, **dadurch gekennzeichnet, dass** die Drehzahl der Fräswalze (4) erhöht wird, wenn die mindestens eine für den Betriebszustand der Fräswalze charakteristische Messgröße (M(t)) einen kritischen Grenzwert überschreitet, so dass die Fräswalze in einem nicht kritischen Betriebszustand betrieben wird.

14. Verfahren nach Anspruch 12 oder 13, **dadurch gekennzeichnet, dass** die Drehzahl der Fräswalze (4) von einem vorgegebenen Wert stufenweise solange erhöht wird, bis die mindestens eine für den Betriebszustand der Fräswalze charakteristische Messgröße (M(t)) den kritischen Grenzwert um einen vorgegebenen Toleranzwert unterschreitet oder die Drehzahl der Fräswalze (4) von einem vorgegebenen Wert kontinuierlich solange erhöht wird, bis die mindestens eine für den Betriebszustand der Fräswalze charakteristische Messgröße (M(t)) den kritischen Grenzwert um einen vorgegebenen Toleranzwert unterschreitet.

15. Verfahren nach einem der Ansprüche 12 bis 14, **dadurch gekennzeichnet, dass** nach der Anpassung der Drehzahl der Fräswalze (4) zum Betrieb der Fräswalze in einem nicht kritischen Zustand die Drehzahl der Fräswalze reduziert wird und überprüft wird, ob nach der Reduzierung der Drehzahl die mindestens eine für den Betriebszustand der Fräswalze charakteristische Messgröße (M(t)) den kritischen Grenzwert um einen vorgegebenen Toleranzwert unterschreitet, wobei die reduzierte Drehzahl beibehalten wird, wenn nach der Reduzierung der Drehzahl die mindestens eine für den Betriebszustand der Fräswalze charakteristische Messgröße (M(t)) den kritischen Grenzwert um einen vorgegebenen Toleranzwert unterschreitet.

16. Verfahren nach einem der Ansprüche 12 bis 15, **dadurch gekennzeichnet, dass** die Baumaschine in einem Sollwert-Steuermodus betrieben werden kann, in dem sich die Baumaschine mit einer bestimmten Vorschubgeschwindigkeit bewegt und die Fräswalze (4) mit einer bestimmten Drehzahl dreht, und in einem adaptiven Steuermodus betrieben werden kann, in dem sich die Baumaschine mit der Vorschubgeschwindigkeit bewegt und die Fräswalze (4) sich mit einer Drehzahl dreht, die derart angepasst ist, dass die Fräswalze (4) in einem nicht kritischen Betriebszustand betrieben wird, wobei von dem Sollwert-Steuermodus in den adaptiven Steuermodus in Abhängigkeit von der mindestens einen für einen kritischen Betriebszustand der Fräswalze charakteristischen Messgröße (M(t)) übergegangen wird.

17. Verfahren nach einem der Ansprüche 12 bis 16, **dadurch gekennzeichnet, dass** die für den kritischen Betriebszustand der Fräswalze charakteristische Messgröße (M(t)) eine mit Vibrationen oder Stößen korrelierende Messgröße ist, die beim Betrieb der Fräswalze (4) in einem kritischen Betriebszustand an einem Bauteil der Baumaschine auftreten, oder eine mit Drehzahlschwankungen von rotierenden Bauteilen im Antriebsstrang der Räder oder Laufwerke oder im Antriebsstrang der Fräswalze korrelierende Messgröße ist oder eine mit Schwankungen des Hydraulikdrucks in einem Hydrauliksystem der Baumaschine korrelierende Messgröße ist.

## Claims

1. Self-propelled construction machine, in particular a road-milling machine, recycler, stabiliser or surface miner, comprising
a machine frame (2), which is supported by a chassis (1), which has wheels or tracks (1A, 1B),
a milling drum (4) which is arranged on the machine frame (2),
a drive unit (8) for driving the wheels or tracks (1A, 1B) and the milling drum (4),
a control unit (19) for controlling the drive unit (8),
a signal-receiving unit (18) for detecting at least one measurement variable (M(t)) which is characteristic of an operating state of the milling drum,
**characterised in that** the control unit (19) is configured in such a way that the rotational speed of the milling drum (4) is adapted, on the basis of at least one measurement variable (M(t)) which is characteristic of a critical operating state of the milling drum, to the operating conditions of the construction machine in such a way that the milling drum is operated in a non-critical operating state.

2. Self-propelled construction machine according to claim 1, **characterised in that** the control unit (19) is configured in such a way that the rotational speed of the milling drum is increased if the at least one measurement variable (M(t)) which is characteristic of the operating state of the milling drum exceeds a critical limit value so that the milling drum (4) is operated in a non-critical operating state.

3. Self-propelled construction machine according to either claim 1 or claim 2, **characterised in that** the control unit (19) is configured in such a way that the rotational speed of the milling drum (4) is increased in steps from a preset value until the at least one measurement variable (M(t)) which is characteristic of the operating state of the milling drum falls below the critical limit value by a preset tolerance value, or the rotational speed of the milling drum is continuously increased from a preset value until the at least one measurement variable (M(t)) which is characteristic of the operating state of the milling drum falls below the critical limit value by a preset tolerance value.

4. Self-propelled construction machine according to claim 3, **characterised in that** the construction machine comprises an input unit (17) for inputting the preset value for the rotational speed of the milling drum (4).

5. Self-propelled construction machine according to any of claims 1 to 4, **characterised in that** the control unit (19) is configured in such a way that, after adapting the rotational speed of the milling drum (4) in order to operate the milling drum in a non-critical state, the rotational speed of the milling drum is reduced, and a check is carried out as to whether, after the reduction of the rotational speed, the at least one measurement variable (M(t)) which is characteristic of the operating state of the milling drum falls below the critical limit value by a preset tolerance value, the reduced rotational speed being maintained when, after the reduction of the rotational speed, the at least one measurement variable which is characteristic of the operating state of the milling drum falls below the critical limit value by a preset tolerance value.

6. Self-propelled construction machine according to any of claims 1 to 5, **characterised in that** the control unit (19) provides a target-value control mode, in which the construction machine moves at a specific travel speed and the milling drum (4) rotates at a specific rotational speed, and provides an adaptive control mode, in which the construction machine moves at the travel speed and the milling drum rotates at a rotational speed which is adapted in such a way that the milling drum (4) is operated in a non-critical operating state, the control unit (19) transitioning from the target-value control mode into the adaptive control mode on the basis of the at least one measurement variable which is characteristic of a critical operating state of the milling drum (4).

7. Self-propelled construction machine according to any of claims 1 to 6, **characterised in that** the signal-receiving unit (18) comprises at least one sensor (18A) for detecting vibrations or impacts which occur during operation of the milling drum in a critical operating state.

8. Self-propelled construction machine according to claim 7, **characterised in that** the sensor (18A) for detecting vibrations or impacts is an accelerometer or strain sensor which is arranged on a component of the construction machine.

9. Self-propelled construction machine according to either claim 7 or claim 8, **characterised in that** the sensor (18A) for detecting vibrations or impacts is arranged on the milling drum (4), the milling drum housing (5) or the machine frame (2) of the construction machine.

10. Self-propelled construction machine according to any of claims 1 to 6, **characterised in that** the signal-receiving unit (18) comprises at least one pressure sensor which is arranged in a hydraulic system of the construction machine for measuring fluctuations in the hydraulic pressure.

11. Self-propelled construction machine according to any of claims 1 to 6, **characterised in that** the signal-receiving unit (18) is designed in such a way that fluctuations in the rotational speed of rotating components in the drive train of the wheels or tracks and/or in the drive train of the milling drum are detected.

12. Method for operating a self-propelled construction machine, in particular a road-milling machine, recycler, stabiliser or surface miner, which comprises:
a machine frame (2), which is supported by a chassis (1), which has wheels or tracks,
a milling drum (4) which is arranged on the machine frame (2),
**characterised in that** the rotational speed of the milling drum (4) is adapted, on the basis of at least one measurement variable (M(t)) which is characteristic of a critical operating state of the milling drum, to the operating conditions of the construction machine in such a way that the milling drum is operated in a non-critical operating state.

13. Method according to claim 12, **characterised in that** the rotational speed of the milling drum (4) is increased if the at least one measurement variable (M(t)) which is characteristic of the operating state of the milling drum exceeds a critical limit value so that the milling drum is operated in a non-critical operating state.

14. Method according to either claim 12 or claim 13, **characterised in that** the rotational speed of the milling drum (4) is increased in steps from a preset value until the at least one measurement variable (M(t)) which is characteristic of the operating state of the milling drum falls below the critical limit value by a preset tolerance value, or the rotational speed of the milling drum (4) is continuously increased from a preset value until the at least one measurement variable (M(t)) which is characteristic of the operating state of the milling drum falls below the critical limit value by a preset tolerance value.

15. Method according to any of claims 12 to 14, **characterised in that**, after adapting the rotational speed of the milling drum (4) in order to operate the milling drum in a non-critical state, the rotational speed of the milling drum is reduced, and a check is carried out as to whether, after the reduction of the rotational speed, the at least one measurement variable (M(t)) which is characteristic of the operating state of the milling drum falls below the critical limit value by a preset tolerance value, the reduced rotational speed being maintained when, after the reduction of the rotational speed, the at least one measurement variable (M(t)) which is characteristic of the operating state of the milling drum falls below the critical limit value by a preset tolerance value.

16. Method according to any of claims 12 to 15, **characterised in that** the construction machine can be operated in a target-value control mode, in which the construction machine moves at a specific travel speed and the milling drum (4) rotates at a specific rotational speed, and can be operated in an adaptive control mode, in which the construction machine moves at the travel speed and the milling drum (4) rotates at a rotational speed which is adapted in such a way that the milling drum (4) is operated in a non-critical operating state, a transition taking place from the target-value control mode into the adaptive control mode on the basis of the at least one measurement variable (M(t)) which is characteristic of a critical operating state of the milling drum.

17. Method according to any of claims 12 to 16, **characterised in that** the measurement variable (M(t)) which is characteristic of the critical operating state of the milling drum is a measurement variable correlating to vibrations or impacts which occur on a component of the construction machine during operation of the milling drum (4) in a critical operating state, or a measurement variable correlating to fluctuations in the rotational speed of rotating components in the drive train of the wheels or tracks or in the drive train of the milling drum, or a measurement variable correlating to fluctuations in the hydraulic pressure in a hydraulic system of the construction machine.

## Revendications

1. Engin de construction automoteur, en particulier fraiseuse routière, recycleur, stabilisateur ou mineur de surface, avec
un bâti de machine (2), qui est supporté par un châssis (1), qui présente des roues ou des mécanismes de roulement (1A, 1B),
un cylindre de fraisage (4) disposé au niveau du bâti de machine (2),
une unité d'entraînement (8) servant à entraîner les roues ou les mécanismes de roulement (1A, 1B) et le cylindre de fraisage (4),
une unité de commande (19) servant à commander l'unité d'entraînement (8),
une unité de réception de signal (18) servant à détecter au moins une grandeur de mesure (M(t)) caractéristique d'un état de fonctionnement du cylindre de fraisage, **caractérisé en ce que** l'unité de commande (19) est configurée de telle manière que le nombre de tours du cylindre de fraisage (4) est adapté aux conditions de fonctionnement de l'engin de construction en fonction d'au moins une grandeur de mesure (M(t)) caractéristique d'un état de fonctionnement critique du cylindre de fraisage de telle manière que le cylindre de fraisage fonctionne dans un état de fonctionnement non critique.

2. Engin de construction automoteur selon la revendication 1, **caractérisé en ce que** l'unité de commande (19) est configurée de telle manière que le nombre de tours du cylindre de fraisage est augmenté quand l'au moins une grandeur de mesure (M(t)) caractéristique de l'état de fonctionnement du cylindre de fraisage dépasse une valeur limite critique, de sorte que le cylindre de fraisage (4) fonctionne dans un état de fonctionnement non critique.

3. Engin de construction automoteur selon la revendication 1 ou 2, **caractérisé en ce que** l'unité de commande (19) est configurée de telle manière que le nombre de tours du cylindre de fraisage (4) est augmenté d'une valeur spécifiée progressivement jusqu'à ce que l'au moins une grandeur de mesure (M(t)) caractéristique de l'état de fonctionnement du cylindre de fraisage présente une valeur inférieure à la valeur limite critique d'une valeur de tolérance spécifiée ou le nombre de tours du cylindre de fraisage est augmenté en continu d'une valeur spécifiée jusqu'à ce que l'au moins une grandeur de mesure (M(t)) caractéristique de l'état de fonctionnement du cylindre de fraisage présente une valeur inférieure à la valeur limite critique d'une valeur de tolérance spécifiée.

4. Engin de construction automoteur selon la revendication 3, **caractérisé en ce que** l'engin de construction présente une unité de saisie (17) servant à saisir la valeur spécifiée pour le nombre de tours du cylindre de fraisage (4).

5. Engin de construction automoteur selon l'une quelconque des revendications 1 à 4, **caractérisé en ce que** l'unité de commande (19) est configurée de telle manière qu'après l'adaptation du nombre de tours du cylindre de fraisage (4) pour faire fonctionner le cylindre de fraisage dans un état non critique, le nombre de tours du cylindre de fraisage est réduit et il est vérifié si après la réduction du nombre de tours, l'au moins une grandeur de mesure (M(t)) caractéristique de l'état de fonctionnement du cylindre de fraisage présente une valeur inférieure à la valeur limite critique d'une valeur de tolérance spécifiée, dans lequel le nombre de tours réduit est conservé si après la réduction du nombre de tours, l'au moins une grandeur de mesure caractéristique de l'état de fonctionnement du cylindre de fraisage présente une valeur inférieure à la valeur limite critique d'une valeur de tolérance spécifiée.

6. Engin de construction automoteur selon l'une quelconque des revendications 1 à 5, **caractérisé en ce que** l'unité de commande (19) prévoit un mode de commande de valeur de consigne, dans lequel l'engin de construction se déplace à une vitesse d'avance définie et le cylindre de fraisage (4) tourne avec un nombre de tours défini, et prévoit un mode de commande adaptatif, dans lequel l'engin de construction se déplace à la vitesse d'avance et le cylindre de fraisage tourne avec un nombre de tours, qui est adapté de telle manière que le cylindre de fraisage (4) fonctionne dans un état de fonctionnement non critique, dans lequel l'unité de commande (19) passe du mode de commande de valeur de consigne dans le mode de commande adaptatif en fonction de l'au moins une grandeur de mesure caractéristique d'un état de fonctionnement critique du cylindre de fraisage (4).

7. Engin de construction automoteur selon l'une quelconque des revendications 1 à 6, **caractérisé en ce que** l'unité de réception de signal (18) présente au moins un capteur (18A) servant à détecter des vibrations ou des à-coups, qui apparaissent lors du fonctionnement du cylindre de fraisage dans un état de fonctionnement critique.

8. Engin de construction automoteur selon la revendication 7, **caractérisé en ce que** le capteur (18A) servant à détecter des vibrations ou des à-coups est une sonde d'accélération ou un capteur de contrainte disposée ou disposé au niveau d'un composant de l'engin de construction.

9. Engin de construction automoteur selon la revendication 7 ou 8, **caractérisé en ce que** le capteur (18A) servant à détecter des vibrations ou des à-coups est disposé au niveau du cylindre de fraisage (4), du boîtier de cylindre de fraisage (5) ou du bâti de machine (2) de l'engin de construction.

10. Engin de construction automoteur selon l'une quelconque des revendications 1 à 6, **caractérisé en ce que** l'unité de réception de signal (18) présente au moins un capteur de pression disposé dans un système hydraulique de l'engin de construction, servant à mesurer des fluctuations de la pression hydraulique.

11. Engin de construction automoteur selon l'une quelconque des revendications 1 à 6, **caractérisé en ce que** l'unité de réception de signal (18) est réalisée de telle manière que des fluctuations de nombre de tours de composants en rotation dans la chaîne cinématique des roues ou des mécanismes de roulement et/ou dans la chaîne cinématique du cylindre de fraisage sont détectées.

12. Procédé servant à faire fonctionner un engin de construction automoteur, en particulier une fraiseuse routière, un recycleur, un stabilisateur ou un mineur de surface, qui présente :
un bâti de machine (2), qui est supporté par un châssis (1), qui présente des roues ou des mécanismes de roulement,
un cylindre de fraisage (4) disposé au niveau du bâti de machine (2),
**caractérisé en ce que** le nombre de tours du cylindre de fraisage (4) est adapté aux conditions de fonctionnement de l'engin de construction en fonction d'au moins une grandeur de mesure (M(t)) caractéristique d'un état de fonctionnement critique du cylindre de fraisage de telle manière que le cylindre de fraisage fonctionne dans un état de fonctionnement non critique.

13. Procédé selon la revendication 12, **caractérisé en ce que** le nombre de tours du cylindre de fraisage (4) est augmenté quand l'au moins une grandeur de mesure (M(t)) caractéristique de l'état de fonctionnement du cylindre de fraisage dépasse une valeur limite critique de sorte que le cylindre de fraisage fonctionne dans un état de fonctionnement non critique.

14. Procédé selon la revendication 12 ou 13, **caractérisé en ce que** le nombre de tours du cylindre de fraisage (4) est augmenté progressivement d'une valeur spécifiée jusqu'à ce que l'au moins une grandeur de mesure (M(t)) caractéristique de l'état de fonctionnement du cylindre de fraisage présente une valeur inférieure à la valeur limite critique d'une valeur de tolérance spécifiée ou le nombre de tours du cylindre de fraisage (4) est augmenté en continu d'une valeur spécifiée jusqu'à ce que l'au moins une grandeur de mesure (M(t)) caractéristique de l'état de fonctionnement du cylindre de fraisage présente une valeur inférieure à la valeur limite critique d'une valeur de tolérance spécifiée.

15. Procédé selon l'une quelconque des revendications 12 à 14, **caractérisé en ce qu'**après l'adaptation du nombre de tours du cylindre de fraisage (4) pour faire fonctionner le cylindre de fraisage dans un état non critique, le nombre de tours du cylindre de fraisage est réduit et il est vérifié si après la réduction du nombre de tours, l'au moins une grandeur de mesure (M(t)) caractéristique de l'état de fonctionnement du cylindre de fraisage présente une valeur inférieure à la valeur limite critique d'une valeur de tolérance spécifiée, dans lequel le nombre de tours réduit est conservé si après la réduction du nombre de tours, l'au moins une grandeur de mesure (M(t)) caractéristique de l'état de fonctionnement du cylindre de fraisage présente une valeur inférieure à la valeur limite critique d'une valeur de tolérance spécifiée.

16. Procédé selon l'une quelconque des revendications 12 à 15, **caractérisé en ce que** l'engin de construction peut fonctionner dans un mode de commande de valeur de consigne, dans lequel l'engin de construction se déplace à une vitesse d'avance définie et le cylindre de fraisage (4) tourne avec un nombre de tours défini, et peut fonctionner dans un mode de commande adaptatif, dans lequel l'engin de construction se déplace à la vitesse d'avance et le cylindre de fraisage (4) tourne avec un nombre de tours, qui est adapté de telle manière que le cylindre de fraisage (4) fonctionne dans un état de fonctionnement non critique, dans lequel on passe du mode de commande de valeur de consigne dans le mode de commande adaptatif en fonction de l'au moins une grandeur de mesure (M(t)) caractéristique d'un état de fonctionnement critique du cylindre de fraisage.

17. Procédé selon l'une quelconque des revendications 12 à 16, **caractérisé en ce que** la grandeur de mesure (M(t)) caractéristique de l'état de fonctionnement critique du cylindre de fraisage est une grandeur de mesure en corrélation avec des vibrations ou des à-coups, qui apparaissent lors du fonctionnement du cylindre de fraisage (4) dans un état de fonctionnement critique au niveau d'un composant de l'engin de construction, ou est une grandeur de mesure en corrélation avec des fluctuations de nombre de tours de composants en rotation dans la chaîne cinématique des roues ou des mécanismes de roulement ou dans la chaîne cinématique du cylindre de fraisage ou est une grandeur de mesure en corrélation avec des fluctuations de la pression hydraulique dans un système hydraulique de l'engin de construction.
